(19)

Europäisches
Patentamt
European
Patent Office
Office européen
des brevets

(11) **EP 1 542 387 B1**

(12) **EUROPEAN PATENT SPECIFICATION**

(45) Date of publication and mention
of the grant of the patent:
**04.04.2007 Bulletin 2007/14**

(51) Int Cl.:
*H04L 1/06* (2006.01)   *H04B 7/06* (2006.01)

(21) Application number: **03293097.6**

(22) Date of filing: **10.12.2003**

(54) **Space-time transmit diversity method and apparatus**

Raum-/Zeitsendediversitätsverfahren und Einrichtung

Procédé de diversité d'émission spatio-temporelle et dispositif

(84) Designated Contracting States:
**AT BE BG CH CY CZ DE DK EE ES FI FR GB GR
HU IE IT LI LU MC NL PT RO SE SI SK TR**

(43) Date of publication of application:
**15.06.2005 Bulletin 2005/24**

(73) Proprietor: **MOTOROLA, INC.
Schamburg,
Illinois 60196 (US)**

(72) Inventors:
 • **Fontenelle, Sandrine
 75015 Paris (FR)**
 • **Rouquette Leveil, Stéphanie
 91300 Massy (FR)**

(74) Representative: **Jepsen, René Pihl et al
Eltima Consulting
Grove House, Lutyens Close'
Chineham Court
Basingstoke, Hants RG24 8AG (GB)**

(56) References cited:
 **US-A1- 2003 156 572     US-A1- 2003 210 750**

 • **LIU L ET AL: "Combining beamforming and
 quasi-orthogonal space-time block coding using
 channel mean feedback" GLOBECOM '03. IEEE
 GLOBAL TELECOMMUNICATIONS
 CONFERENCE (IEEE CAT. NO.03CH37489),
 GLOBECOM '03. IEEE GLOBAL
 TELECOMMUNICATIONS CONFERENCE, SAN
 FRANCISCO, CA, USA, 1-5 DEC. 2003, pages
 1925-1930 vol.4, XP002283588 2003, Piscataway,
 NJ, USA, IEEE, USA ISBN: 0-7803-7974-8**
 • **JÖNGREN J ET AL: "Combining beamforming
 and orthogonal space-time block coding" IEEE
 TRANSACTIONS ON INFORMATION THEORY,
 IEEE INC. NEW YORK, US, vol. 48, March 1999
 (1999-03), pages 1-16, XP002970505 ISSN:
 0018-9448**

## Description

Technical Field

The invention relates to encoding and decoding schemes for multiple transmit / multiple receive (MTMR) wireless communications.

Background

The capabilities of multiple transmit / multiple receive (MTMR) systems can be exploited for different purposes. For example, transmit adaptive arrays (TxAA) or space-time block codes (STBC) make use of the spatial diversity possible from multiple antennas to improve the overall quality of the communication link, by sending multiple copies of symbols that experience statistically independent channel conditions.

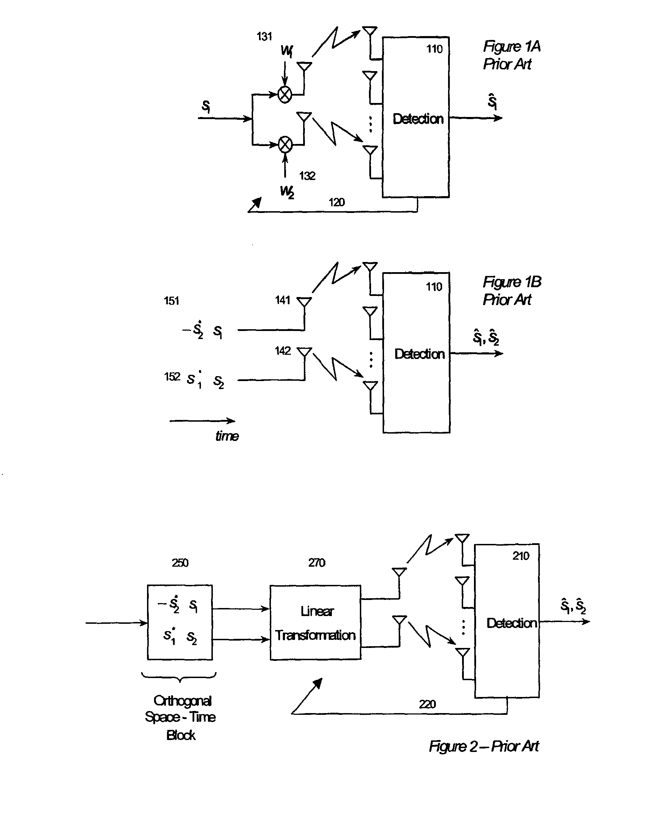

TxAA or beamforming is described in "Digital beamforming in wireless communications", by J. Litva and T. Kwok-Yeung, Artech House, Boston, 1996. Referring to Figure 1A, the receiver or detector 110 can periodically send via a feedback channel 120 either substantially optimal transmit weights 131, 132 (or quantised versions thereof) or equivalent information such as channel estimates, in order to maximise the received power. Note that, when channel reciprocity can be assumed (e.g. for time division duplex (TDD) systems), no feedback from the receiver to the transmitter side is required and transmit weights can be directly derived at the transmitter.

Orthogonal STBC is described for two transmit antennas in "A simple transmit diversity technique for wireless communications", by S.M. Alamouti, IEEE Journal on Selected Areas in Comm., pp. 1451-1458, Oct. 1998. Referring to Figure 1B, each of two antennas 141, 142 sequentially transmits a different complex signal 151, 152 derived from two symbols. The system relies on both the uncorrelated channel conditions for each antenna and the transmission time to reduce the chance of both instances of a symbol being lost. The receiver then recovers the symbols via a simple detection scheme due to code orthogonality. A potential extension of orthogonal block codes to more than two transmit antennas is described in "Space-Time Block Codes from Orthogonal Designs", by V. Tarokh et al., in IEEE Transactions on Information Theory, vol.45, no 5, pp.1456-1467, July 1999.

The TxAA scheme is closed loop (e.g. via a feedback channel 120), taking advantage of some information about the channel response available at the transmitter to benefit from an additional 3dB SNR coherence gain over the STBC scheme.

When Maximum Likelihood (ML) detection and perfect channel estimation is available at both transmitter and receiver, this information enables TxAA to outperform STBC. However, when the channel estimation is poor, STBC outperforms TxAA.

A scheme to combine the benefits of TxAA and STBC for both good and poor channel estimation is described in "Combining Transmit Beamforming and Orthogonal Space-Time Block Codes By Utilizing Side Information", by G. Jongren, M. Skoglund and B. Ottersten, 1st IEEE Sensor Array and Multichannel Signal Processing Workshop, March 2000. Referring to Figure 2, Orthogonal space-time code 250 is passed through a linear transformation 270 dependant upon the accuracy of channel estimations received via feedback channel 220, then output to typically two transmit antennas (e.g. if an Alamouti space-time block code is considered). The scheme approximates TxAA performance/ behaviour when channel estimations are good, and STBC when channel estimations are poor or non-existent.

The capabilities of multiple transmit / multiple receive (MTMR) systems can be exploited not only to improve diversity. MTMR systems can also increase the overall transmitted data rate without recourse to high order modulation (with its attendant increases in complexity and channel sensitivity) by using spatial division multiplexing (SDM):

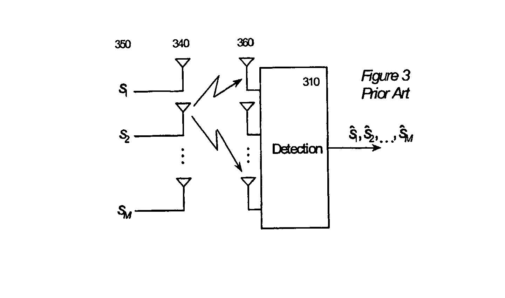

Referring to Figure 3, rather than transmit multiple copies of data, SDM simultaneously transmits distinct data streams 350 on each transmit antenna 340 (or a group of antennas in concert), exploiting the multiple receive antennas 360 to then separate the streams.

Such multiplexing is highly dependent on the number of receive elements (antennas or groups of antennas in concert), which for most receiver schemes should be at least greater than the number of transmit streams in order to avoid a prohibitive decoding complexity or poor performance.

However, whilst SDM increases the data rate, the error rate on each stream is increased as SDM suffers from poor individual channel performance due to lack of diversity when the number of receive antennas is not large enough.

In an attempt to combine the advantages of spatial diversity from either STBC or TxAA with the data rates of SDM, two schemes have been proposed in the prior art:

Texas Instruments, "Double-STTD scheme for HSDPA systems with four transmit antennas: Link level simulation results", TSGR1-20(02)-0459, Busan, Korea, May 21-25, 2001 proposes a combination of STBC and SDM (STBC-SDM), whilst EP publication 1359683 (Motorola), "Wireless communication using multi-transmit multi-receive antenna arrays", by Soodesh Buljore, Sandrine Vialle and Nick Whinnett, proposes a combination of TxAA and SDM (TxAA-SDM).

Referring to Figure 4A, an STBC-SDM scheme is shown wherein four antennas 441-444 sequentially transmit two parallel independent STBC streams 451, 452 and 453, 454 to be extracted via multiple receive antennas at the detector. Whilst any number of receive antennas 460 are possible, the prior art suggests at least two antennas to recover both data streams. US2003/0210750A1 (Texas Instruments) augments a similar scheme with a linear transform that aims to adapt to channel conditions in order to make the transformed channel matrix approximately equal to the identity matrix.

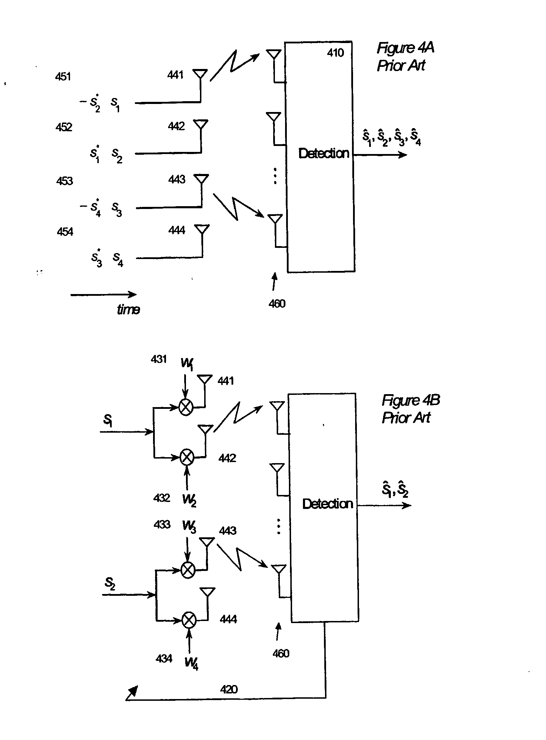

Referring to Figure 4B, a TxAA-SDM scheme is shown wherein four antennas 441-444 transmit two parallel independent streams to be extracted via multiple receive antennas at the detector. Whilst any number of receive antennas 460 are possible, the prior art suggests at least two antennas to recover both data streams.

Again, the TxAA-SDM scheme is closed loop, providing information about the channel response at the transmitter to benefit from an additional SNR coherence gain over the STBC-SDM scheme.

Consequently, when Maximum Likelihood (ML) detection and perfect channel estimation is available at both transmitter and receiver, this knowledge enables TxAA-SDM to outperform STBC-SDM. However, when the channel estimation is poor, STBC-SDM outperforms TxAA-SDM.

Thus neither scheme is the best for all channel information conditions and there is need for improvement.

The purpose of the present invention is to address the above need.

Summary of the Invention

The inventors of the present invention have appreciated that it is possible to combine transmit adaptive arrays (TxAAs), space-time block codes (STBCs) and spatial division multiplexing (SDM), and provide a system combining all three together with a method of operation.

In a first aspect, the present invention provides a method for transmitting symbols via a transmitter comprising a plurality of antennas, as claimed in claim 1.

In a second aspect, the present invention provides a method for receiving symbols via a receiver comprising a plurality of antennas, as claimed in claim 12.

In a third aspect, the present invention provides apparatus for use in transmitting symbols via a transmitter comprising a plurality of antennas, as claimed in claim 18.

In a fourth aspect, the present invention provides apparatus for use in receiving symbols via a receiver comprising a plurality of antennas, as claimed in claim 19.

Further features of the present invention are as claimed in the dependent claims.

Brief description of the drawings

FIG. 1A is a block diagram of a transmit adaptive array or beam-forming system known to the prior art.

FIG. 1B is a block diagram of a space time block coding (or 'Alamouti') system known to the prior art.

FIG. 2 is a block diagram of a combined transmit adaptive array and space time block coding known to the prior art.

FIG. 3 is a block diagram of a spatial division multiplexing system known to the prior art.

FIG. 4A is a block diagram of a combined space time block coder and spatial division multiplexing system known to the prior art.

FIG. 4B is a block diagram of a combined transmit adaptive array and spatial division multiplexing system known to the prior art.

An embodiment of the present invention will now be described by way of example with reference to the accompanying drawings:

FIG. 5 is a block diagram of an embodiment of the present invention combining transmit adaptive arrays, space time block coding and spatial division multiplexing.

FIG. 6 is a graph illustrating performance in terms of bit error rate for STBC-SDM, TxAA-SDM and an embodiment of the present invention.

Detailed description

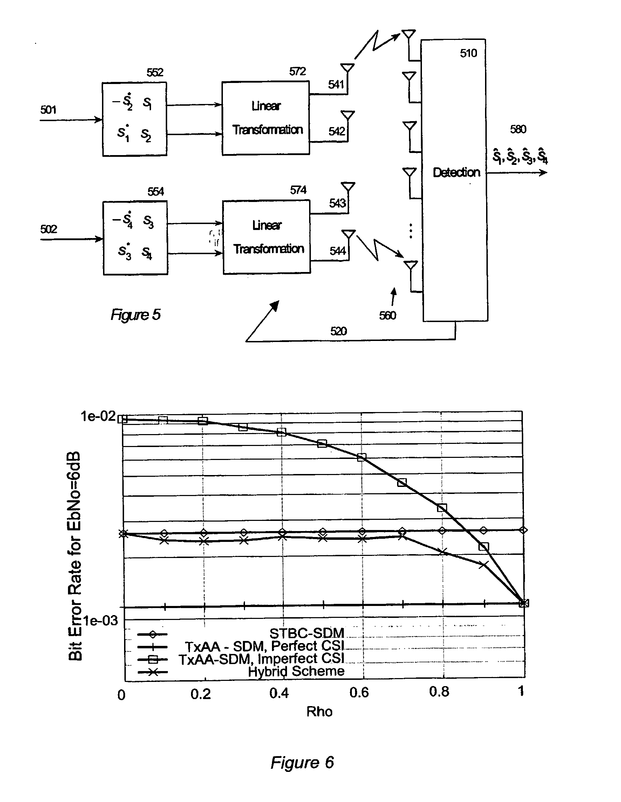

Referring to Figure 5, in an embodiment of the present invention, distinct independent data streams 501, 502 are passed through distinct orthogonal space-time block codes 552, 554 followed by a linear transform 572, 574 (one linear transform per stream). The approximation of the linear transforms 572, 574 to TxAA weighting is related to channel estimation accuracy (quality). The transformed streams are transmitted in parallel on separate pairs of transmit antennas 541, 542 and 543, 544, exploiting the multiple receive antennas 560 to then separate the SDM streams.

It will be clear to a person skilled in the art that more than two distinct data streams 501, 502 may be transmitted, with the provision of additional transmit antennas and if necessary additional receive antennas. Moreover, other STBCs than those presented in Figure 5 can be considered (e.g. more than two transmit antennas per STBC could be envisaged). In addition the STBCs used for each stream are not necessarily the same from one stream to another.

Thus more generally, let $M$ denote the number of transmit antennas, $N$ the number of receive antennas and $S$ the number of independent data streams. Let $M_i$ $i = 1 ... S$ be the number of transmit antennas dedicated to stream $i$, such that

$$\sum_{i=1}^{S} M_i = M .$$

With reference to Figure 5, for the purposes of example let $M = 4$ transmit antennas, $N = 2$ receive antennas, $S = 2$ independent streams and $M_1 = M_2 = 2$.

Symbols s1, s2,..., which may be encoded and modulated, are demultiplexed into $S$ streams, which are then separately encoded both in time and space by a space-time block encoder denoted $\mathbf{Z_i}$, $i = 1,...,S$.

For simplicity in later describing the receiver scheme, the space-time block code is assumed to be orthogonal (e.g. Alamouti code for $M_1 = M_2 = 2$ transmit antennas) and identical on each stream, but this scheme can be generalized to any space-time code without any restrictive assumptions on the code orthogonality, rate or diversity order.

Each space-time encoder maps its input data sequence of length $Q_i$ $S_i = (S_{i1}, S_{i2}, ... S_{iQi})$ that is to be transmitted into a $M_i \times Q_i$ matrix of codewords $\mathbf{Z_i}$, that is then split into a set of $M_i$ parallel sequences of length $Q_i$. Typically, $Q_i$ will be the same for all i. Thus for the purposes of this example, $Q = Q_1 = Q_2$ 2.

Codewords $\mathbf{Z_i}$ are then transformed by a $M_i \times M_i$ linear transformation denoted $\mathbf{W_i}$ 572, 574 in order to adapt the code to the available channel information.

The resulting sequences, encompassed in a $M_i \times Q_i$ matrix $\mathbf{C_i} = \mathbf{W_i Z_i}$, are sent on the $M_i$ transmit antennas during $Q_i$ time intervals, for i=1,..,S.

Transmitted data are then recovered at the receiver by for example means of a Maximum Likelihood (ML) receiver.

To interpret the received data, then without loss of generality consider a frequency non-selective Multiple Input Multiple Output (MIMO) channel. Each entry $h_{kj}$ of the $N \times M$ channel matrix $\mathbf{H}$ represents the channel response between transmit antenna $j$ and receive antenna $k$, and is modelled as a complex centered Gaussian variable with variance 1.

The received signal included in an $N \times Q$ matrix $\mathbf{Y}$ is then a superposition of M transmitted sequences corrupted by an additive white Gaussian noise characterized by the $N \times Q$ matrix $\Sigma$ with covariance matrix equal to $\sigma^2 \mathbf{I_N}$:

$$\mathbf{Y} = \mathbf{HC} + \Sigma$$

$$= \mathbf{HWZ} + \Sigma$$

=where

$$C = \begin{bmatrix} C_1 & = & W_1 Z_1 \\ C_2 & = & W_2 Z_2 \\ & \vdots & \\ C_S & = & W_S Z_S \end{bmatrix}, W = \begin{bmatrix} W_1 & 0 & \cdots & \cdots & 0 \\ 0 & W_2 & \ddots & & \vdots \\ \vdots & 0 & \ddots & \ddots & \vdots \\ \vdots & \vdots & \ddots & \ddots & 0 \\ 0 & \cdots & \cdots & 0 & W_S \end{bmatrix} \text{ and } Z = \begin{bmatrix} Z_1 \\ Z_2 \\ \vdots \\ Z_S \end{bmatrix}.$$

In the following it is assumed that the channel is quasi-static, being constant over a burst of codewords but possibly varying from one burst to another.

Continuing the example, further specifying $S = 2$, then

$$Z_1 = \begin{bmatrix} s_1 & - s_2^* \\ s_2 & s_1^* \end{bmatrix} \text{ and } Z_2 = \begin{bmatrix} s_3 & - s_4^* \\ s_4 & s_3^* \end{bmatrix}.$$

The received signal on antenna $n$, $n = 1...N$, during $Q=2$ symbol periods is then given by

$$\begin{bmatrix} y_{n,1} & y_{n,2} \end{bmatrix} = \begin{bmatrix} G_{n,1} & G_{n,2} \end{bmatrix} \begin{bmatrix} s_1 & - s_2^* \\ s_2 & s_1^* \end{bmatrix} + \begin{bmatrix} G_{n,3} & G_{n,4} \end{bmatrix} \begin{bmatrix} s_3 & - s_4^* \\ s_4 & s_3^* \end{bmatrix} + \begin{bmatrix} b_{n,1} & b_{n,2} \end{bmatrix}$$

where

$$\begin{bmatrix} G_{n,1} & G_{n,2} \end{bmatrix} = \begin{bmatrix} h_{n,1} & h_{n,2} \end{bmatrix} \begin{bmatrix} w_{1,1} & w_{1,2} \\ w_{2,1} & w_{2,2} \end{bmatrix} \text{ and } \begin{bmatrix} G_{n,3} & G_{n,4} \end{bmatrix} = \begin{bmatrix} h_{n,3} & h_{n,4} \end{bmatrix} \begin{bmatrix} w_{3,1} & w_{3,2} \\ w_{4,1} & w_{4,2} \end{bmatrix}$$

and $b_{n,1}$ and $b_{n,2}$ refer to noise components on receive antenna $n$ at two consecutive symbol periods.

$[y_{n,1}, y_{n,2}]$ can then be rewritten as

$$\begin{bmatrix} y_{n,1} & y_{n,2}^* \end{bmatrix} = \begin{bmatrix} s_1 & s_2 & s_3 & s_4 \end{bmatrix} \begin{bmatrix} G_{n,1} & G_{n,2}^* \\ G_{n,2} & - G_{n,1}^* \\ G_{n,3} & G_{n,4}^* \\ G_{n,4} & - G_{n,3}^* \end{bmatrix} + \text{noise}$$

to put forward the equivalent channel matrix.

By stacking the received signals from $N$ antennas on a single vector, it is possible to finally describe the whole system with the following equation:

$$
\begin{bmatrix} y_{1,1} \\ y_{1,2}^* \\ \vdots \\ y_{n,1} \\ y_{n,2}^* \\ \vdots \\ y_{N,1} \\ y_{N,2}^* \end{bmatrix}
=
\begin{bmatrix}
G_{1,1} & G_{1,2} & G_{1,3} & G_{1,4} \\
G_{1,2}^* & -G_{1,1}^* & G_{1,4}^* & -G_{1,3}^* \\
\vdots & \vdots & \vdots & \vdots \\
G_{n,1} & G_{n,2} & G_{n,3} & G_{n,4} \\
G_{n,2}^* & -G_{n,1}^* & G_{n,4}^* & -G_{n,3}^* \\
\vdots & \vdots & \vdots & \vdots \\
G_{N,1} & G_{N,2} & G_{N,3} & G_{N,4} \\
G_{N,2}^* & -G_{N,1}^* & G_{N,4}^* & -G_{N,3}^*
\end{bmatrix}
\begin{bmatrix} s_1 \\ s_2 \\ s_3 \\ s_4 \end{bmatrix}
+ \text{noise}
$$

Spatial division multiplexing detection (demultiplexing) can now be performed to recover the four transmitted symbols $s_1$, $s_2$, $s_3$ and $s_4$ 580 from the *2N* available observations using one of the algorithms known in the art, based for example upon Maximum Likelihood, Zero Forcing or Minimum Mean Squared Error criteria.

However, recall that *G = HW.* It is therefore further necessary to consider a method to design the *W* matrix in the light of channel matrix *H*.

The W linear transform can be seen as a black box with two inputs in addition to the space-time encoded symbols. These two inputs are:

  i. the channel estimation (realized either at the transmitter and/or at the receiver depending on assumptions with respect to channel reciprocity), or a related parameter (for example the TxAA coefficients); and

  ii. a control parameter, which can be for example the channel estimation quality, a measure of the antenna correlation, channel interference, or an assumed/defined constant value.

For example, consider the case where this parameter is related to the channel estimation quality ρ. This parameter ρ quantifies whether the channel estimation is reliable or not, which affects how the channel estimate is used to compute the W matrix.

The issue is highlighted the extreme cases, i.e. when ρ approaches 1 or 0:

  i. if ρ approaches 1, this means that the channel estimation given to the black box to compute W is near perfect. In this case, the weights computed are equivalent to those computed for a near optimal transmit adaptive antenna array.

  ii. if ρ approaches 0, this means that the channel estimation given to the black box at the transmitter is very bad. In this case, the weights computed use little channel estimation information and tend towards an STBC output.

Thus the degree to which the weights of the linear transformation approximate those of a near optimal transmit adaptive antenna array is related to the value of ρ.

An example calculation for ρ for the case where channel estimation at the receiver is perfect and channel estimation errors at the transmitter are due to solely to delay in a Rayleigh fading channel is $\rho = J_0(2\pi F_{dmax}D)$, were *D* is the delay, $F_{dmax}$ the maximum Doppler (due to relative speed) and $J_0$ a Bessel function. Further examples of calculating channel estimation reliability for the case of quantisation error can be found in US 2001/0033622 (Jongren et. al.)

One method for designing the **W** matrix in the light of channel matrix **H** is highlighted in the following example, where perfect channel estimation is assumed at the receiver 510, whilst the ability to reconfigure **W** against varying channel estimation quality at the transmitter is considered.

Lack of reliability in channel estimation at the transmitter may come in this example from imperfection in the feedback channel 520, including delay and quantisation, but any source of imperfection is envisaged as applicable; e.g. when no feedback is required due to channel reciprocity but channel estimation errors occur at the transmitter.

The linear transformations $\mathbf{W_i}$, *i - 1...S,* are separately determined so as to substantially optimise a given criterion of each stream *i*, such as minimizing an upper bound on the pairwise error probability of a codeword per stream as considered in G. Jongren et. al., cited previously, and described below.

Thus to derive linear transformations $\mathbf{W_i}$, then for *i = 1...S,*

Step 1 : Compute $\hat{\mathbf{V}}_i$; $\Psi_i = \hat{\mathbf{V}}_i\hat{\Lambda}_i\hat{\mathbf{V}}_i^H = \dfrac{|\rho|^2}{\alpha}\,{}_i\hat{\mathbf{H}}_i{}^H\hat{\mathbf{H}}_i$, where $\hat{\mathbf{H}}_i$ denotes the equivalent channel estimation for stream $i$, $\rho$ represents the theoretical normalized correlation coefficient between the channel coefficients and the estimated channel coefficients, and = $\sigma_H^2$ if $\sigma_H^2$ is the variance of each individual channel coefficient. Thus $\rho$ is indicative of the quality of the estimation of channel conditions.

Note that the equivalent channel for stream $i$ is given by the following matrix $\mathbf{H}_i$:

$$\mathbf{H}_i = \begin{bmatrix} h_{1,\sum\limits_{1\le j<i} M_j+1} & \cdots & h_{1,\sum\limits_{1\le j<i} M_j+k} & \cdots & h_{1,\sum\limits_{1\le j\le i} M_j} \\ \vdots & \vdots & \vdots & \vdots & \\ h_{n,\sum\limits_{1\le j<i} M_j+1} & \cdots & h_{n,\sum\limits_{1\le j<i} M_j+k} & \cdots & h_{n,\sum\limits_{1\le j\le i} M_j} \\ \vdots & \vdots & \vdots & \vdots & \\ h_{N,\sum\limits_{1\le j<i} M_j+1} & \cdots & h_{N,\sum\limits_{1\le j<i} M_j+k} & \cdots & h_{N,\sum\limits_{1\le j\le i} M_j} \end{bmatrix}$$

Step 2: Compute $\mathbf{W}_i$; $\Lambda_i^{1/2}$, where $\Lambda_i$ is a diagonal matrix whose coefficients $\lambda_1^i$, $\lambda_2^i$, ..., $\lambda_{M_i}^i$ are obtained through the following process:

a) Set j = 1;

b) Solve

$$f_i(\gamma, j) = 1 + \frac{M_i - j + 1}{\alpha\eta} - \sum_{k=j}^{M_i} \frac{N + \sqrt{N^2\alpha^2\eta^2 + 4\alpha\eta\hat{\lambda}_k^i\gamma}}{2\alpha\eta\gamma} = 0 \quad \text{for}$$

$\gamma$, where $\hat{\lambda}_1^i$, $\hat{\lambda}_2^i$, ...., $\hat{\lambda}_{M_i}^i$ denote the coefficients of the matrix $\hat{\Lambda}_i$ of step 1;

c) Compute $\lambda_p^i = \dfrac{N + \sqrt{N^2\alpha^2\eta^2 + 4\alpha\eta\hat{\lambda}_p^i\gamma}}{2\alpha\eta\gamma} - \dfrac{1}{\alpha\eta}$ for $p = j,.. ,M_i$;

d) If $\lambda_j^i < 0$, set $\lambda_j^i = 0$, $j = j + 1$ and repeat from b).

Where $\gamma$ is the Lagrange multiplier corresponding to a power constraint, $\sigma_H^2$ where $\sigma_H^2$ is the variance of each individual channel coefficient, and where $\eta = \mu_{min}/(4\sigma^2)$ where $\mu_{min}$ is related to the STBC characteristics; for example, for orthogonal space-time codes, if $C_k$ and $C_1$ are two arbitrary codewords, $\mu_{k,1}$ is a scaling factor defined as $(C_k-C_1)(C_{-k}C_1)^t=\mu_{k,1}I_M$ where $I_M$ is the MxM identity matrix and $^t$ denotes the matrix transposition. The factor $\mu_{min}$ is then defined as the minimum of all $\mu_{k,1}$ taken over all pairs of codewords $(C,C_{k1})$.

Alternatively, unlike Jongren et. al., instead of computing the eigenvalues $\lambda_1^i$, $\lambda_2^i$, ... , $\lambda_{M_i}^i$ based on short term statistics, long term statistics can be used. In this case these eigenvalues change only when the value of the correlation coefficient changes, for example with mobile speed or feedback quality if required, and can be deduced from a lookup table based on the channel auto-correlation.

In a further embodiment, when a feedback channel is required in order to have some knowledge about the channel state information at the transmitter, the coefficients of the matrices $\hat{\mathbf{V}}_{i_i}$ can be quantised (as for example in 3GPP Release 99 for TxAA schemes in frequency division duplexing (FDD) downlink environments) in order to reduce the amount of feedback information.

Referring now to Figure 6, the benefit of the present invention is clear, as its performance is bounded by STBC-SDM and enhanced by TxAA-SDM when channel estimation is good, giving a better overall performance than either method.

A person skilled in the art will appreciate that the relation governing the approximation of the linear transform to TxAA weighting can be easily generalized to other criteria for $\rho$ than the channel estimation accuracy, such as for example the antenna correlation or channel interference.

It will also be clear that an assumed rather than an estimated value of $\rho$ is possible, if not preferred.

The present invention can be easily generalized to delay-spread environments and combined with code-division multiple access (CDMA) or orthogonal frequency division multiplexing (OFDM) systems, for example.

Similarly, whilst the above equations are derived assuming a flat fading channel, it will readily apparent that they can be adapted to frequency selective channels.

As an embodiment of the present invention takes into account the channel estimation quality at the transmitter it can be used in FDD downlink universal mobile telecommunications service (UMTS) systems for example when combined with quantisation of the matrix $W$.

Finally, note that advantageously, embodiments of the present invention can be altered if necessary to act as simple STBC or TxAA schemes as special cases.

Apparatus for use in transmitting symbols via a transmitter comprising a plurality of antennas (541, 542, 543, 544) according to a method as described herein is also provided.

Apparatus for use in receiving symbols via a receiver comprising a plurality of antennas (560) according to a method as described herein is further also provided.

**Claims**

1. A method for transmitting data symbols via a transmitter comprising a plurality of antennas (541, 542, 543, 544); the method comprising the steps of:

    assigning data symbols to at least two data streams (501, 502);
    generating space-time block codes, referred thereinafter as STBCs (552, 554), distinctively for each data stream;
    for each data stream, passing each space-time block code through a respective linear transformation (572, 574), said linear transformations being a function of channel estimation and a control parameter;
    transmitting each passed through data stream on at least a respective antenna by applying spatial division multiplexing.

2. A method according to claim 1, wherein the space-time block codes are orthogonal.

3. A method according to claim 2, wherein the space-time block code scheme is based on an Alamouti coding scheme.

4. A method according to any one of the preceding claims, wherein the degree to which the linear transformation approximates an optimal transmit adaptive antenna array transformation is related to a value of the control parameter.

5. A method according to any one of the preceding claims, wherein the control parameter of the linear transformations is related to the channel.

6. A method according to claim 5, wherein the control parameter of the linear transformations is related to any or all of;

    i. channel condition estimation quality;
    ii. channel interference; and
    iii. antenna correlation.

7. A method according to any one of claims 1 to 3, wherein the control parameter of the linear transformations is a constant value.

8. A method according to any of the preceding claims, wherein the linear transformation matrix $W_i$ (572, 574) is calculated for each data stream i as $W_i = \hat{V}_i \Lambda_i^{1/2}$ wherein $\hat{V}_i$ is calculated by solving

$$\Psi_i = \hat{V}_i \hat{\Lambda}_i V_i'' = \frac{|\rho|^2}{\alpha} \hat{H}_i'' \hat{H}_i,$$ where $\hat{H}_i$ denotes the equivalent channel estimation for stream $i$, $\rho$ represents the theoretical normalized correlation coefficient between the channel coefficients and the estimated channel coefficients and $\alpha = \sigma_H^2 (1 - |\rho|^2)$ where $\sigma_H^2$ is the variance of each individual channel coefficient.

9. A method according to claim 8, wherein the linear transformation matrix $W_i$ (572,574) is calculated for each data stream i as $\mathbf{W}_i = \hat{V}_i \Lambda_i^{1/2}$, where $\Lambda_i$ is a diagonal matrix whose coefficients $\lambda_1^i, \lambda_2^i, ..., \lambda_{M_i}^i$ are obtained through the following process:

    a. Set $j = 1$;
    b. Solve

$$f_i(\gamma, j) = 1 + \frac{M_i - j + 1}{\alpha \eta} - \sum_{k=j}^{M_i} \frac{N + \sqrt{N^2 \alpha^2 \eta^2 + 4\alpha \eta \hat{\lambda}_k^i \gamma}}{2\alpha \eta \gamma} = 0$$

    c. Compute

$$\lambda_p^i = \frac{N + \sqrt{N^2 \alpha^2 \eta^2 + 4\alpha \eta \hat{\lambda}_p^i \gamma}}{2\alpha \eta \gamma} - \frac{1}{\alpha \eta} \text{ for } p = j, .., M_i \text{ } M_i : \text{number of transmit antennas };$$

    d. If $\lambda_j^i < 0$, set $\lambda_j^i = 0$, $j = j + 1$ and repeat from step b), where $\gamma$ is a Lagrange multiplier corresponding to a power constraint, $\alpha = \sigma_H^2 (1 - |\rho|^2)$ where $\sigma_H^2$ is the variance of each individual channel coefficient, and where $\eta = \mu_{min}/(4\sigma^2)$ where $\mu_{min}$ is related to the STBC characteristics $\hat{\lambda}_p^i$ denote the coefficients of matrix $\hat{\Lambda}_i$.

10. A method according to claims 8 wherein the calculation of coefficients $\lambda_1^i, \lambda_2^i, ..., \lambda_{M_i}^i$ employs long term statistics.

11. A method according to any one of the preceding claims, wherein the number of transmission streams is the same or fewer than the number of receive antennas.

12. A method for receiving data symbols via a receiver (510) comprising a plurality of antennas (560), the method comprising the steps of:

    spatial division demultiplexing of signals from the plurality of antennas , to obtain estimates of linear transformed space-time block codewords referred thereinafter as STBCs (552, 554) said transformed STBCs having been generated according to claim 1 from each transmitted data stream (501, 502); and
    decoding estimates of linear transformed STBCs (552, 554), the linear transformations being a function of channel estimation and a control parameter, to obtain estimates of data symbols (580).

**13.** A method according to claim 12 further comprising;

obtaining a quality measure of a transmission channel condition estimate; and
feeding back information for the calculation of linear transform W comprising said quality measure to a transmitter
via a feedback means (520).

**14.** A method according to claim 13, wherein said information is quantised prior to being fed back to the transmitter.

**15.** A method according to any one of claims 12 to 14, wherein spatial division demultiplexing is performed by a method
based on any one of;

i. maximum likelihood;
ii. zero forcing; and
iii. minimum mean squared error criteria.

**16.** A method according to any one of claims 12 to 15, wherein decoding of estimated space-time block codes is based
on an Alamouti scheme.

**17.** A method according to any one of claims 12 to 16, wherein the step of obtaining estimates of the data symbols
comprises applying spatial division demultiplexing on received signals **Y**, wherein:

$$
\begin{bmatrix}
y_{1,1} \\
y_{1,2}^{\bullet} \\
y_{n,1} \\
y_{n,2}^{\bullet} \\
y_{N,1} \\
y_{N,2}^{\bullet}
\end{bmatrix}
=
\begin{bmatrix}
G_{1,1} & G_{1,2} & G_{1,3} & G_{1,4} \\
G_{1,2}^{\bullet} & -G_{1,1}^{\bullet} & G_{1,4}^{\bullet} & -G_{1,3}^{\bullet} \\
G_{n,1} & G_{n,2} & G_{n,3} & G_{n,4} \\
G_{n,2}^{\bullet} & -G_{n,1}^{\bullet} & G_{n,4}^{\bullet} & -G_{n,3}^{\bullet} \\
G_{N,1} & G_{N,2} & G_{N,3} & G_{N,4} \\
G_{N,2}^{\bullet} & -G_{N,1}^{\bullet} & G_{N,4}^{\bullet} & -G_{N,3}^{\bullet}
\end{bmatrix}
\begin{bmatrix}
S_1 \\
S_2 \\
S_3 \\
S_4
\end{bmatrix}
+ \Sigma
$$

where **Y** is the received signals from $N$ antennas, **G** is the linear transformation **W** convolved with the space-time
block code transform and channel response **H** between transmit and receive antennas, **S** are the data symbols and
$\Sigma$ is the noise on each signal.

**18.** Apparatus for use in transmitting data symbols via a transmitter comprising a plurality of antennas, (541, 542, 543,
544) according to a method as claimed in any one of claims 1 to 11, said apparatus further comprising:

space-time block codes generating means for the data symbols assigned to at least two data streams (501,502);
linear transformation means to generate linear transformations (572,574) for each data stream, wherein said
linear transformations are a function of channel estimation and a control parameter;
transmission means for each data stream comprising at least a first respective antenna; and spatial division
multiplexing means for each data stream.

**19.** Apparatus for use in receiving data symbols via a receiver comprising a plurality of antennas (560) according to a
method as claimed in any one of claims 12 to 17, said apparatus further comprising:

spatial division demultiplexing means specially adapted to obtain
estimates of linear transformed space-time block codewords (552, 554) from each transmitted data stream
(501, 502) said transformed STBCs having been generated according to claim 1, and
decoding means to decode estimates of linear transformed STBCs (552, 554), the linear transformations being
a function of channel estimation and a control parameter, to obtain estimates of data symbols (580).

**Patentansprüche**

1. Verfahren zum Übertragen von Datensymbolen über einen Sender, der eine Mehrzahl von Antennen (541, 542, 543, 544) umfasst;
   wobei das Verfahren die folgenden Schritte umfasst:

   Zuweisen von Datensymbolen zu mindestens zwei Datenreihen (501, 502);
   Erzeugen von Raum-/Zeit-Blockcodes, nachstehend als STBCs (552, 554) bezeichnet, unverwechselbar für jede Datenreihe;
   Für jede Datenreihe, Passieren jedes Raum-/Zeit-Blockcodes durch eine jeweilige lineare Transformation (572, 574), wobei die lineare Transformation eine Funktion einer Kanalabschätzung und eines Steuerparameters ist;
   Übertragen jeder durchpassierten Datenreihe auf mindestens einer jeweiligen Antenne durch Anwenden von Raum-Multiplexieren (Spatial-Division-Multiplexing).

2. Verfahren gemäß Anspruch 1, wobei die Raum-/Zeit-Blockcodes orthogonal sind.

3. Verfahren gemäß Anspruch 2, wobei das Raum-/Zeit-Blockcode-Schema auf einem Alamouti-Codierschema basiert.

4. Verfahren gemäß einem der vorangehenden Ansprüche,
   wobei sich der Grad, bis zu dem sich die lineare Transformation einer adaptiven optimalen Sendeantennengruppentransformation annähert, auf einen Wert des Steuerparameters bezieht.

5. Verfahren gemäß einem der vorangehenden Ansprüche,
   wobei sich der Steuerparameter der linearen Transformationen auf den Kanal bezieht.

6. Verfahren gemäß Anspruch 5, wobei sich der Steuerparameter der linearen Transformationen auf irgendeinen oder alle der folgenden Punkte bezieht:

   i. Kanalbedingungsabschätzungsqualität;
   ii. Kanalstörung; und
   iii. Antennenkorrelation.

7. Verfahren gemäß einem der Ansprüche 1 bis 3, wobei der Steuerparameter der linearen Transformationen ein konstanter Wert ist.

8. Verfahren gemäß einem der vorangehenden Ansprüche,

   wobei die lineare Transformationsmatrix $W_i$ (572, 574) für jede Datenreihe i als $W_i = \hat{V}_i \Lambda_i^{1/2}$ berechnet wird,

   wobei $\hat{V}$ durch Lösen von $\psi_i = \hat{V}_i \hat{\Lambda}_i \hat{V}_j^H = \dfrac{|\rho|^2}{\alpha} \hat{H}_i{}^H \hat{H}_i$ berechnet wird, wobei $\hat{H}_i$ die äquivalente Kanalabschätzung für die Reihe $i$ bezeichnet, $\rho$ den theoretischen normalisierten Korrelationskoeffizienten zwischen den Kanalkoeffizienten und den abgeschätzten Kanalkoeffizienten bezeichnet und $\alpha = \sigma_{II}^2 \left(1 - |\rho|^2\right)$, wobei $\sigma_{II}^2$ die Varianz eines jeden einzelnen Kanalkoeffizienten ist.

9. Verfahren gemäß Anspruch 8, wobei die lineare Transformationsmatrix $W_i$ (572, 574) für jede Datenreihe $i$ als

   $W_i = \hat{V}_i \Lambda_i^{1/2}$ berechnet wird, wobei $\Lambda_i$ eine diagonale Matrix ist, deren Koeffizienten $\lambda_1^i, \lambda_2^i, ..., \lambda_{M_i}^i$ durch den folgenden Prozess erhalten werden:

   a. $j$ = 1 setzen;
   b.

$$f_i(\gamma, j) = 1 + \frac{M_1 - j + 1}{\alpha\eta} - \sum_{k=j}^{M_i} \frac{N + \sqrt{N^2\alpha^2\eta^2 + 4\alpha\eta\hat{\lambda}_k^i\gamma}}{2\alpha\eta\gamma} = 0 \quad \texttt{lösen}$$

c.

$$\lambda_p^i = \frac{N + \sqrt{N^2\alpha^2\eta^2 + 4\alpha\eta\hat{\lambda}_p^i\gamma}}{2\alpha\eta\gamma} - \frac{1}{\alpha\eta} \quad \texttt{für}\ \ p\ =\ j,\ \ldots,\ M_i$$

berechnen; $M_i$: Zahl von Übertragungsantennen;

d. $\lambda_j^i = 0$, $j = j + 1$ setzen und ab dem Schritt b) wiederholen, wenn $\lambda_j^i < 0$, wobei $\gamma$ ein Lagrange-Multiplikator ist, der einer Leistungsbedingung entspricht, $\alpha = \sigma_{II}^2\left(1 - |\rho|^2\right)$, wobei $\sigma_{II}^2$ die Varianz jedes einzelnen Kanalkoeffizienten ist und wobei $\eta = \mu_{min}/(4\sigma^2)$, wobei sich $\mu_{min}$ auf die STBC-Merkmale bezieht und $\hat{\lambda}_p^i$ die Koeffizienten der Matrix $\hat{\Lambda}_i$ bezeichnen.

10. Verfahren gemäß Anspruch 8, wobei die Berechnung der Koeffizienten $\lambda_1^i, \lambda_2^i, \ldots, \lambda_{M_i}^i$ eine Langzeitstatistik einsetzt.

11. Verfahren gemäß einem der vorangehenden Ansprüche, wobei die Zahl von Übertragungsreihen dieselbe oder kleiner als die Zahl von Empfangsantennen ist.

12. Verfahren zum Empfangen von Datensymbolen über einen Empfänger (510), der eine Mehrzahl von Antennen (560) umfasst, wobei das Verfahren die folgenden Schritte umfasst:

Raum-Demultiplexieren (Spatial-Division-Demultiplexing) von Signalen von der Mehrzahl von Antennen, um Abschätzungen von linear transformierten Raum-/Zeit-Blockcodewörtern zu erhalten, die nachstehend als STBCs (552, 554) bezeichnet werden, wobei die transformierten STBCs gemäß Anspruch 1 von jeder übertragenen Datenreihe (501, 502) erzeugt worden sind; und
Decodieren von Abschätzungen von linear transformierten STBCs (552, 554), wobei die linearen Transformationen eine Funktion einer Kanalabschätzung und eines Steuerparameters sind, um Abschätzungen von Datensymbolen (580) zu erhalten.

13. Verfahren gemäß Anspruch 12, das weiterhin umfasst:

Erhalten eines Oualitätsmaßes einer Übertragungskanalbedingungsabschätzung; und
Rückkoppeln einer Information für die Berechnung der linearen Transformation W, die das Oualitätsmaß umfasst, über ein Rückkopplungsmittel (520) an einen Sender.

14. Verfahren gemäß Anspruch 13, wobei die Information quantisiert wird, bevor sie an den Sender rückgekoppelt wird.

15. Verfahren gemäß einem der Ansprüche 12 bis 14, wobei das Raum-Demultiplexieren durch ein Verfahren durchgeführt wird, das auf irgendeinem der folgenden Kriterien basiert:

i. Maximum-Likelihood;
ii. Null-Forcierung; und
iii. kleinster mittlerer quadratischer Fehler.

16. Verfahren gemäß einem der Ansprüche 12 bis 15, wobei ein Decodieren von abgeschätzten Raum-/Zeit-Blockcodes auf einem Alamouti-Schema basiert.

**17.** Verfahren gemäß einem der Ansprüche 12 bis 16, wobei der Schritt eines Erhaltens von Abschätzungen der Datensymbole ein Anwenden des Raum-Demultiplexierens auf die empfangenen Signale **Y** umfasst, wobei:

$$
\begin{bmatrix}
y_{1,1} \\
y_{1,2}^* \\
\ldots\ldots \\
y_{n,1} \\
y_{n,2}^* \\
\ldots\ldots \\
y_{N,1} \\
y_{N,2}^*
\end{bmatrix}
=
\begin{bmatrix}
G_{1,1} & G_{1,2} & G_{1,3} & G_{1,4} \\
G_{1,2}^* & -G_{1,1}^* & G_{1,4}^* & -G_{1,3}^* \\
\ldots\ldots\ldots\ldots\ldots\ldots\ldots\ldots\ldots\ldots \\
G_{n,1} & G_{n,2} & G_{n,3} & G_{n,4} \\
G_{n,2}^* & -G_{n,1}^* & G_{n,4}^* & -G_{n,3}^* \\
\ldots\ldots\ldots\ldots\ldots\ldots\ldots\ldots\ldots\ldots \\
G_{N,1} & G_{N,2} & G_{N,3} & G_{N,4} \\
G_{N,2}^* & -G_{N,1}^* & G_{N,4}^* & -G_{N,3}^*
\end{bmatrix}
\begin{bmatrix}
S_1 \\
S_2 \\
S_3 \\
S_4
\end{bmatrix}
+ \Sigma
$$

wobei **Y** die empfangenen Signale von $N$ Antennen bezeichnet, **G** die lineare Transformation **W** ist, die mit der Raum-/Zeit-Blockcodetransformation und der Kanalantwort **H** zwischen Sende- und Empfangsantennen gefaltet ist, **S** die Datensymbole sind und $\Sigma$ das Rauschen auf jedem Kanal ist.

**18.** Vorrichtung zur Verwendung bei einem Übertragen von Datensymbolen über einen Sender, der eine Mehrzahl von Antennen (541, 542, 543, 544) umfasst, entsprechend einem Verfahren gemäß einem der Ansprüche 1 bis 11, wobei die Vorrichtung weiterhin umfasst:

Mittel zum Erzeugen von Raum-/Zeit-Blockcodes für die Datensymbole, die mindestens zwei Datenreihen (501, 502) zugewiesen sind;
Mittel zur linearen Transformation, um lineare Transformationen (572, 574) für jede Datenreihe zu erzeugen, wobei die linearen Transformationen eine Funktion einer Kanalabschätzung und eines Steuerparameters sind;
Übertragungsmittel für jede Datenreihe, die mindestens eine erste entsprechende Antenne umfassen; und
Mittel zum Raum-Multiplexieren für jede Datenreihe.

**19.** Vorrichtung zur Verwendung bei einem Empfangen von Datensymbolen über einen Empfänger, der eine Mehrzahl von Antennen (560) umfasst, entsprechend einem Verfahren gemäß einem der Ansprüche 12 bis 17, wobei die Vorrichtung weiterhin umfasst:

Mittel zum Raum-Demultiplexieren, die speziell adaptiert sind, um Abschätzungen von linear transformierten Raum-/Zeit-Blockcodewörtern (552, 554) von jeder übertragenen Datenreihe (501, 502) zu erhalten, wobei die transformierten STBCs gemäß Anspruch 1 erzeugt worden sind; und
Decodiermittel, um Abschätzungen von linear transformierten STBCs (552, 554) zu decodieren, wobei die linearen Transformationen eine Funktion einer Kanalabschätzung und eines Steuerparameters sind, um Abschätzungen von Datensymbolen (580) zu erhalten.

## Revendications

**1.** Procédé de transmission de symboles de données par le biais d'un émetteur comprenant une pluralité d'antennes (541, 542, 543, 544), le procédé comprenant les étapes consistant à :

affecter des symboles de données à au moins deux flux de données (501, 502),
générer des codes à blocs espace-temps, appelés ci-après codes STBC (552, 554) de manière distincte pour chaque flux de données,
pour chaque flux de données, faire passer chaque code à blocs espace-temps au travers d'une transformation linéaire respective (572, 574), ladite transformation linéaire étant une fonction d'une estimation de canal et d'un paramètre de commande,
transmettre chaque flux de données passé au travers sur au moins une antenne respective en appliquant un multiplexage par répartition dans l'espace.

**2.** Procédé selon la revendication 1, dans lequel les codes à blocs espace-temps sont orthogonaux.

**3.** Procédé selon la revendication 2, dans lequel le principe de code à blocs espace-temps est fondé sur un principe de codage d'Alamouti.

**4.** Procédé selon l'une quelconque des revendications précédentes, dans lequel le degré selon lequel la transformation linéaire approche une transformation de réseau d'antennes adaptatif d'émission optimal est associée à une valeur du paramètre de commande.

**5.** Procédé selon l'une quelconque des revendications précédentes, dans lequel le paramètre de commande des transformations linéaires est associé au canal.

**6.** Procédé selon la revendication 5, dans lequel le paramètre de commande des transformations linéaires est associé à l'une quelconque ou à la totalité de :

    i. une qualité d'estimation de condition de canal,
    ii. une interférence de canal, et
    iii. une corrélation d'antenne.

**7.** Procédé selon l'une quelconque des revendications 1 à 3,
dans lequel le paramètre de commande des transformations linéaires est une valeur constante.

**8.** Procédé selon l'une quelconque des revendications précédentes, dans lequel la matrice de transformation linéaire

$W_i$ (572, 574) est calculée pour chaque flux de données i par $W_i = \hat{V}_i \, \Lambda_i^{1/2}$, où $\hat{V}_i$ est calculé en résolvant $\Psi_i =$

$$\hat{V}_i \, \hat{\Lambda}_i \, \hat{V}_j^H = \frac{|\rho|^2}{\alpha} \, \hat{H}_i^H \hat{H}_i \,,$$ où $\hat{H}_i$ désigne l'estimation de canal équivalente pour le flux i, $\rho$ représente le coefficient

de corrélation normalisé théorique entre les coefficients de canaux et les coefficients de canaux estimés, et

$\bar{\alpha} = \sigma_N^2 (1 - |\rho|^2)$ où $\sigma_N^2$ est la variance de chaque coefficient de canal individuel.

**9.** Procédé selon la revendication 8, dans lequel la matrice de transformation linéaire $W_i$= (572, 574) est calculée pour chaque flux de données i comme étant $W_i \hat{V}_i \, \Lambda_i^{1/2}$, où $\Lambda_i$ est une matrice diagonale dont les coefficients

$\lambda_1^i, \, \lambda_2^i, ..., \, \lambda_{M_i}^i$ sont obtenus par le biais du traitement suivant :

    a) soit j = 1,
    b) résoudre

$$f_i(\gamma, j) = 1 + \frac{M_i - j + 1}{\alpha\eta} - \sum_{k=j}^{M_i} \frac{N + \sqrt{N^2\alpha^2\eta^2 + 4\alpha\eta\hat{\lambda}_k^i\gamma}}{2\alpha\eta\gamma} = 0$$

    c) calculer

$$\lambda_P^i = \frac{N + \sqrt{N^2\alpha^2\eta^2 + 4\alpha\eta\hat{\lambda}_P^i\gamma}}{2\alpha\eta\gamma} - \frac{1}{\alpha\eta} \text{ pour } p = j, \, ..., M_i, \, M_i$$

nombre d'antennes d'émission

d) $\lambda^i_j < 0,$ établir $\lambda^i_j = 0,$ j = j + 1 et répéter à partir de b), où $\gamma$ est un multiplicateur de Lagrange correspondant à une contrainte de puissance,

$$\alpha = \hat{\sigma}^2_H (1 - |\rho|^2)$$ où $\sigma^2_H$ est la variance de chaque coefficient de canal individuel, et où $\eta = \mu_{min}/(4\sigma^2)$ où $\mu_{min}$ est associé aux caractéristiques de code STBC, $\hat{\lambda}^i_P$ désigne les coefficients de la matrice $\Lambda_i$.

**10.** Procédé selon la revendication 8, dans lequel le calcul des coefficients $\lambda^i_1$, $\lambda^i_2$,..., $\lambda^i_{M_i}$ emploie des statistiques à long terme.

**11.** Procédé selon l'une quelconque des revendications précédentes, dans lequel le nombre de flux d'émission est le même ou est inférieur au nombre d'antennes de réception.

**12.** Procédé de réception de symboles de données par l'intermédiaire d'un récepteur (510) comprenant une pluralité d'antennes (560), le procédé comprenant les étapes consistant à :

démultiplexer par répartition dans l'espace des signaux provenant de la pluralité d'antennes afin d'obtenir des estimations de mots de codes à blocs espace-temps ayant fait l'objet d'une transformation linéaire appelés ci-après codes STBC (552, 554), lesdits blocs STBC ayant fait l'objet d'une transformation ayant été générés conformément à la revendication 1, à partir de chaque flux de données émis (501, 502), et
décoder des estimations de codes STBC ayant fait l'objet d'une transformation linéaire (552, 554), les transformations linéaires étant une fonction d'une estimation de canal et d'un paramètre de commande, afin d'obtenir des estimations de symboles de données (580).

**13.** Procédé selon la revendication 12, comprenant en outre les étapes consistant à :

obtenir une mesure de qualité d'une estimation de condition de canal de transmission, et
appliquer en retour les informations pour le calcul de la transformation linéaire W comprenant ladite mesure de qualité à un émetteur par l'intermédiaire d'un moyen de rétroaction (520).

**14.** Procédé selon la revendication 13, dans lequel lesdites informations sont quantifiées avant d'être fournies en retour à l'émetteur.

**15.** Procédé selon l'une quelconque des revendications 12 à 14, dans lequel le multiplexage par répartition dans l'espace est exécuté par le biais d'un procédé fondé sur l'un quelconque de :

i. la probabilité maximum,
ii. le forçage à zéro, et
iii. les critères d'erreur quadratique moyenne minimum.

**16.** Procédé selon l'une quelconque des revendications 12 à 15, dans lequel le décodage de codes à blocs d'espace-temps estimés est fondé sur le principe d'Alamouti.

**17.** Procédé selon l'une quelconque des revendications 12 à 16, dans lequel l'étape consistant à fournir des estimations des symboles de données comprend l'application d'un démultiplexage à répartition dans l'espace sur des signaux reçus Y, où :

$$
\begin{bmatrix} y_{1,1} \\ y_{1,2}^{\bullet} \\ \vdots \\ y_{n,1} \\ y_{n,2}^{\bullet} \\ \vdots \\ y_{N,1} \\ y_{N,2}^{\bullet} \end{bmatrix} = \begin{bmatrix} G_{1,1} & G_{1,2} & G_{1,3} & G_{1,4} \\ G_{1,2}^{\bullet} & -G_{1,1}^{\bullet} & G_{1,4}^{\bullet} & -G_{1,3}^{\bullet} \\ \vdots & \vdots & \vdots & \vdots \\ G_{n,1} & G_{n,2} & G_{n,3} & G_{n,4} \\ G_{n,2}^{\bullet} & -G_{n,1}^{\bullet} & G_{n,4}^{\bullet} & -G_{n,3}^{\bullet} \\ \vdots & \vdots & \vdots & \vdots \\ G_{N,1} & G_{N,2} & G_{N,3} & G_{N,4} \\ G_{N,2}^{\bullet} & -G_{N,1}^{\bullet} & G_{N,4}^{\bullet} & -G_{N,3}^{\bullet} \end{bmatrix} \begin{bmatrix} s_1 \\ s_2 \\ s_3 \\ s_4 \end{bmatrix} + \Sigma
$$

où Y représente les signaux reçus de N antennes, G est la transformation linéaire W convoluée avec la transformation de code à blocs espace-temps et de la réponse de canal H entre les antennes d'émission et de réception, S représente les symboles de données et $\Sigma$ représente le bruit sur chaque signal.

**18.** Dispositif à utiliser pour émettre des symboles de données par l'intermédiaire d'un émetteur comprenant une pluralité d'antennes (541, 542, 543, 544) conformément à un procédé selon l'une quelconque des revendications 1 à 11, ledit dispositif comprenant en outre :

un moyen de génération de codes à blocs espace-temps pour les symboles de données affectés à au moins deux flux de données (501, 502),
un moyen de transformation linéaire destiné à générer des transformations linéaires (572, 574) pour chaque flux de données, dans lequel lesdites transformations linéaires sont une fonction d'une estimation de canal et d'un paramètre de commande,
un moyen d'émission pour chaque flux de données comprenant au moins une première antenne respective, et
un moyen de multiplexage par répartition dans l'espace pour chaque flux de données.

**19.** Dispositif à utiliser pour recevoir des symboles de données par l'intermédiaire d'un récepteur comprenant une pluralité d'antennes (560) conformément à un procédé selon l'une quelconque des revendications 12 à 17, ledit dispositif comprenant en outre :

un moyen de démultiplexage par répartition dans l'espace spécialement conçu pour obtenir des estimations des mots de codes à blocs espace-temps ayant fait l'objet d'une transformation linéaire (552, 554) à partir de chaque flux de données émis (501, 502), lesdits codes STBC ayant été générés conformément à la revendication 1, et
un moyen de décodage destiné à décoder des estimations de codes STBC ayant fait l'objet d'une transformation linéaire (552, 554), les transformations linéaires étant une fonction d'une estimation de canal et d'un paramètre de commande, pour obtenir des estimations de symboles de données (580).

Figure 1A
Prior Art

Figure 1B
Prior Art

time

Orthogonal
Space - Time
Block

Figure 2 – Prior Art

Figure 3
Prior Art

Figure 4A
Prior Art

Figure 4B
Prior Art

Figure 5

Figure 6